# EUROPEAN PATENT SPECIFICATION

(11) **EP 2 627 429 B1**
(45) Date of publication and mention of the grant of the patent: **09.09.2015**
(21) Application number: 11785780.5
(22) Date of filing: 11.10.2011
(51) Int. Cl.: B01D 39/16

(54) **FILTER AND METHOD FOR ITS PRODUCTION**
FILTER UND HERSTELLUNGSVERFAHREN
FILTRE ET SON PROCÉDÉ DE FABRICATION

(30) Priority: 11.10.2010 IT UD20100184
(43) Date of publication of application: 21.08.2013
(73) Proprietor: Labio Test S.r.l., 33040 Povoletto (IT)
(72) Inventor: SNIDAR, Riccardo, I-33100 Udine (IT); POLETTI, Luca, I-06073 SAN MARIANO DI CORCIANO (IT); POLETTI, Antonio, I-06073 CORCIANO (IT); ASCANI, Francesco, I-06125 PERUGIA (IT); TONON, Alan, I-33028 TOLMEZZO (IT)
(74) Representative: Petraz, Gilberto Luigi
(86) International application number: PCT/IB2011/002380
(87) International publication number: WO 2012/049551

(56) References cited:
- WO-A1-02/15698
- GB-A- 2 440 332

## Description

### FIELD OF THE INVENTION

The present invention concerns a filter, and the method for the production thereof, used in the air circuits of heating, ventilation and/or air conditioning plants (HVAC systems, or Heating, Ventilation and Air Conditioning) in inner areas. In particular, the filter according to the invention combines a filtering action with a bactericidal action, in order to sanitize the air.

The present invention is used in particular in households, in public premises and in every other public or private space such as for example hotels, canteens, conference rooms, industrial warehouses, meeting places such as cinemas and theaters, schools, offices and others.

### BACKGROUND OF THE INVENTION

Various plants are known in the state of the art for conditioning, purifying and damping down potentially noxious or malodorous substances present in the air in a closed or partly closed space.

In particular it is known to make standard air filters for air conditioning plants, which consist of a filtering support, usually in the form of a fabric, which is surface treated to allow a surface application of a composition of metals with a bactericidal action.

The main disadvantage of known filters is that the application of bactericidal metals on the filtering support is not stable or reliable, and there is a real risk of drawing metals into the air circuit and the consequent introduction thereof into the air-conditioned or ventilated space, which is potentially toxic or in any case unhealthy for man.

WO-A-2006/087754 discloses an air filtering system of the regenerable type used in a refrigeration machine, having a filtering element formed by a granular bed of aluminosilicates metalized with metal ions with an antibacterial activity and non-toxic for the human body, such as silver, zinc, copper, and with particle sizes from 1 micron to 50 mm. The filtering element, specifically intended for the sanitizing treatment of the air inside fridges, can be combined with a pre-filter made of chitosan or a functionalized derivation thereof, metalized with one or more of the above-mentioned antibacterial metal ions. This known filtering system is not suitable for HVAC systems because, given their distinctive nature, it is structurally incompatible, and also excessively expensive. Furthermore, zeolite, micronized on a light support, like the ones suitable for HVAC systems, risks dispersing nanoparticles along the aeraulic system which are noxious for health, under the stress of the forced ventilation.

The European patent application EP-A-1607107 describes a device to remove dangerous substances used as an air filter, and formed by a support and an antibody, that is, a reactive protein for a specific dangerous substance. The support is made with a fibrous material that controls the humidity and can be coated with an antibacterial agent, for example chitosan, silver supported on colloidal silica or on zeolite or other.

The application JP-A-7256025 describes an air filter with a sterilizing effect comprising an antibacterial agent based on silver incorporated into porous silica and mixed with chitosan, which is bonded with a filter.

The patent application KR-A-10200511943 describes a HEPA filter comprising a non-woven fabric impregnated with an antibacterial substance, such as a solution with a base of chitosan, silver nanoparticles, water and a ligand.

The application KR-A-102005050371 describes a deodorizing HEPA filter with a filtering element based on silver nanoparticles, a filter with active carbons to remove contaminants and a chitosan filter as an antibacterial.

The application GB-A-2440332 describes a method to make polymer-metal complexes that provides to form a polymer-metal ion combination starting from a saline solution of the metals in contact with the polymer, and to reduce the metal ions in order to obtain the polymer-atomic metal combination. A polymer-metal combination is understood as a regular geometric system in which the metal species is at the center of a crystalline field and coordinates the ligands of an inorganic and organic nature. The polymer-metal combination thus obtained is usable as a bioactive material, in the biomedical and health field or, given the extremely reactive nature of the metal species combined with the polymer obtained, as a catalyst in chemical or biochemical processes.

Application WO-A-02/15698 describes a process for preparing an article based on metal and polymer with biocidal properties which, starting from a solution of polymer and metal combined with the polymer, or in suspension in the polymer, provides to reduce it to an atomic metal, similarly to what is described in GB-A-2440332.

In general therefore, efforts have been made to obtain a stable connection between metals and filtering support but these have led to the production of non-standard filters for the field in question; or filters which, once inserted into the circuit of an aeraulic machine are not able to maintain constant efficiency, predominance, deliveries and, in general, the functioning parameters as required by law for such machines. For example, a corrugated pre-filter typically has a fall in pressure of less than about 5.0 mm (H₂O), whereas an absolute rigid pocket filter normally has a fall in pressure of less than about 3.5 mm (H₂O).

Purpose of the present invention is to produce a filter, and perfect a method to produce it, which has filtering efficiency, bactericidal efficiency and at the same time keeps unchanged the functioning parameters of an aeraulic machine into which it is inserted, according to the typical standards required in the field.

The Applicant has devised, tested and embodied the present invention to overcome the shortcomings of the state of the art and to obtain these and other purposes and advantages.

Unless otherwise defined, all the technical and scientific terms used here and hereafter have the same meaning as commonly understood by a person of ordinary skill in the art in the field to which the present invention belongs. Even if methods and materials similar or equivalent to those described here may be used in practice or in verification tests, the methods and materials of the present invention are described hereafter as an example. In the event of any conflict, the present application shall prevail, including the definitions. The materials, methods and examples have a purely illustrative character and shall not be understood restrictively.

### SUMMARY OF THE INVENTION

The present invention is set forth and characterized in the independent claims, while the dependent claims describe other characteristics of the invention or variants to the main inventive idea.

In accordance with the above purpose, a filter for air-conditioning, ventilation, air control, heating and air purification plants according to the present invention comprises a filtering support with which are stably associated one or more metals in ionic form having a bactericidal action chosen from a group comprising: noble metals such as silver, gold, platinum, or heavy metals such as iron, copper, manganese, zinc, lithium, or an organic bactericidal molecule belonging to the family of quaternary ammonium salts. One form of embodiment of the present invention provides to use Cetyl trimethylammonium bromide (CTAB) as the quaternary ammonium salt.

The metals can be taken individually or in a mixture and also individually or in a mixture with the quaternary ammonium salt.

According to one feature of the present invention, the filtering support comprises a solid biopolymer with a chitosan base, in a concentration in weight greater than or equal to about 15% with respect to the weight of the filtering support.

In some forms of embodiment, the filtering support according to the present invention has a weight in grams comprised between 70 g/m² and 85 g/m² and a thickness comprised between 0.40 mm and 0.60 mm, thus advantageously conforming with the specifications of the filters traditionally used in HVAC systems.

In particular, the chitosan-based biopolymer is provided with at least one or more functional groups which have a high bonding affinity with the above-mentioned metals so as to determine a stable bond with the metals and/or quaternary ammonium salt.

The presence of the functional groups consequently creates a strong chemical bond, thermodynamically stable, between the metal/metals and/or quaternary ammonium salt and biopolymer, thus guaranteeing that they are not drawn into the air circuit.

Chitosan is advantageous because it not only has the above functional groups but natively has an efficient bactericidal action which, in synergy with the bactericidal effect of the metals concerned and/or quaternary ammonium salt, determines a considerable increase in the ability of damping down the bacterial load by the filter according to the invention.

Some forms of embodiment of the present invention provide a range of concentration of the chitosan in the filtering support comprised between 15% and 35% in weight, preferably between 15% and 25% in weight, more preferably between 15% and 20% in weight with respect to the weight of the filtering support. Some specific forms of embodiment provide a concentration of chitosan between 15% and 17% in weight with respect to the weight of the filtering support. One form of embodiment provides chitosan at 16% in weight with respect to the weight of the filtering support. The percentages in weight of the chitosan in the filtering support are intended as substantially relating to chitosan only, that is, not functionalized.

The remaining part in weight of the filtering support according to the present invention is typically formed by synthetic polymeric fiber such as for example viscous fibers or polypropylene or Nylon 6,6.

Normally, the synthetic fiber is added using mechanical and thermal processes with a crossed-over disposition of the fibers for the non-woven fabric configuration or with the weaving of threads of different types in the case of a regular weave.

These ranges of concentration values supply an optimal compromise between bactericidal effect, in synergy with the cited metals and/or quaternary ammonium salt, incorporation of the metals and/or quaternary ammonium salt and structural characteristics typically required by HVAC filters as discussed, in particular in terms of weight in grams and thickness. In this way, the filter obtainable according to the present invention can be introduced into an aeraulic machine of a HVAC system without changing the values of efficiency and prevalence thereof.

The load losses of the filtering medium according to the present invention are less than about 5.0 mm (H₂O).

In some forms of embodiment, the metals are selected from silver, copper and zinc, with exchange or adsorption yields on the bioploymer greater than 30% in weight. In particular, silver and copper guarantee adsorption yields greater than 40% in weight, as high as values even greater than 80% in weight.

In some forms of embodiment, the metal selected is silver with a concentration comprised between about 0.2 mM and 0.5 mM, or silver with a concentration greater than or equal to 0.01 mM, preferably between 0.01 mM and 0.025 mM, in a mixture with copper and zinc, both with a concentration greater than or equal to 1 mM, preferably between 1 mM and 2 mM, with reference to a contact solution with the biopolymer.

In some forms of embodiment, the quaternary ammonium salt, such as for example Cetyl trimethylammonium bromide (CTAB), has a concentration of about 0.5 mM with reference to the contact solution.

According to some forms of embodiment of the present invention, the one or more metals and/or quaternary ammonium salt are associated with the filtering support by incorporation in the biopolymer.

In this way, a treatment is obtained which allows the adhesion of the metals and/or quaternary ammonium salt over the whole volume of the filtering support, and not only a surface treatment. Consequently, the present invention is not subject to the disadvantage of the metals being drawn by the stream of air; its efficiency is preserved and no metals and/or quaternary ammonium salt are sent into the air circuit.

Some forms of embodiment provide that the metals are in the form of powder, so that their incorporation in the biopolymer of the filtering support is more effective, so as to further reduce the drawing effect. The exchange or adsorption yields of the metals on the biopolymer are the same as those shown above.

The filtering support according to the present invention can be made, with the concentrations of biopolymer and synthetic polymeric fiber as above, in the form of a fabric with a regular weave, that is, of the meshed type with the warp and woof at the base of the biopolymer.

In such forms of embodiment, the yarn may be with a continuous filament, or a twisted filament, or a filament cut to a cotton or wool length and then wound.

Alternatively, the filtering support according to the present invention, again with the concentrations of biopolymer and synthetic polymeric fiber as above, can be made as a non-woven fabric (hereafter also NWF).

In some forms of embodiment of the present invention, one or more of the cited metals and/or quaternary ammonium salt can be stably associated inside the biopolymer of the filtering support and/or on its external surface. Generally, this process is known as "grafting" of one or more functionalizing agents on the filtering support.

In some forms of embodiment, before grafting the biopolymer based filtering support can be subjected to pre-activation by means of UV radiation. This solution allows a catalysis of the grafting process.

According to some forms of embodiment, the one or more metals can be introduced, or are stably associated, inside the solid biopolymer incorporating the powders of one or more of the metals directly into the mixture of molten biopolymer that is then extruded to form the filtering support.

Another variant embodiment provides that one or more metals and/or quaternary ammonium salt are stably associated or introduced in ionic form into the solid biopolymer, by means of a contact solution that functions as an ionic bath in which a salt of the selected metal or the quaternary ammonium salt is dissolved and where the solid biopolymer formed is immersed or made to transit. In this way the chemical adherence of the metals and/or quaternary ammonium salt to the solid biopolymer of the filtering support is obtained.

In some forms of embodiment, the selected metal is silver with a concentration comprised between about 0.2 mM and 0.5 mM, or silver with a concentration greater than or equal to 0.01 mM, preferably between 0.01mM and 0.025 mM, in a mixture with copper and zinc, both with a concentration greater than or equal to 1 mM, preferably between 1 mM and 2 mM, with reference to the contact solution with the biopolymer.

In some forms of embodiment the quaternary ammonium salt has a concentration of about 0.5 mM with reference to the contact solution.

In these forms of embodiment in a bath of ionic solution, once grafting has been performed, the filtering support is subjected to drying.

Another form of embodiment provides to deposit metal vapors on the biopolymer, for example making the latter transit in a vacuum chamber where the metal vapors are produced and which are deposited on the biopolymer, stably bonding with the functional groups.

Other forms of embodiment of the present invention provide that the biopolymer is heated to its softening temperature, for example directly in the heated extruder, before it is formed, or subsequently in a hot chamber or hot bath, and that it is subjected to shooting by metal powders which are incorporated inside it and on its surface.

Some forms of embodiment of the present invention comprise filtering supports made with the synthetic polymeric fibers as above, and the chitosan-based biopolymer, in its expanded or spongy form, with open pores. In these forms of embodiment, the powder of the bactericidal metal or metals can first be mixed with the mixture of the molten biopolymer, or can be distributed on and introduced into it at a later time, again exploiting the great affinity between the functional groups of the biopolymer and the metals in question.

Some forms of embodiment of the present invention provide that a filtering device is of the type with pockets, either hard or soft, or a corrugated filtering device, or a filtering cell, flat or with a tubular sack, for fan-coil units. In these forms of embodiment, the filtering support as above is combined with another filtering element, such as for example a synthetic filtering polymeric fiber, or a filtering card of pleated fiber glass.

In the solution with the pockets, the structure of the filter is given by the filtering card, while in the solution with the corrugated filter or filtering cell for fan-coil units, the opposite happens, with the chitosan that acts as the bearing structure.

This form of embodiment with pockets, or corrugated filter or filtering cell for fan-coil units is advantageous, since chitosan does not normally have a good efficiency of mechanical filtration. However, its combination with a filtering card or other filtering element as above, which intercepts the bacteria in transit, prevents the deposit of the bacterial load in the filtering card from generating a proliferation of the bacteria, since such a proliferation is prevented locally by the chitosan itself, which therefore functions as an environmental protection.

Other forms of embodiment of the present invention provide that the filtering support is mounted on a metal or resistant plastic frame, for example consisting of two opposite grids or holed plates.

### BRIEF DESCRIPTION OF THE DRAWINGS

These and other characteristics of the present invention will become apparent from the following description of a preferential form of embodiment, given as a non-restrictive example with reference to the attached drawings wherein:

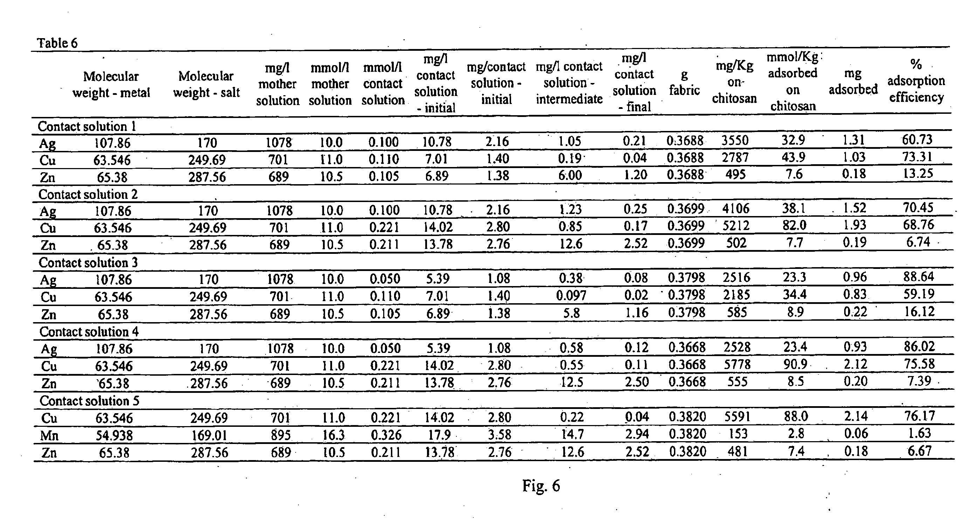

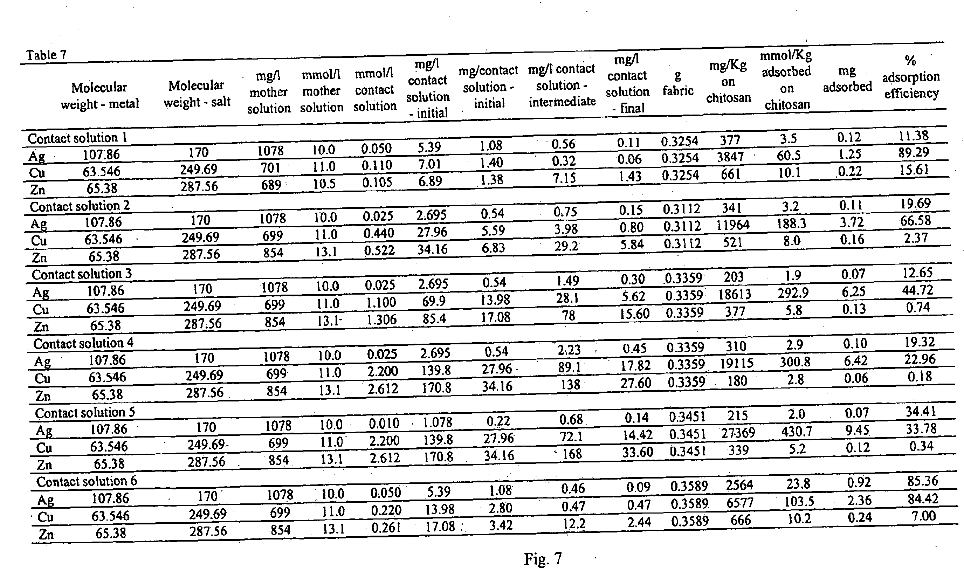

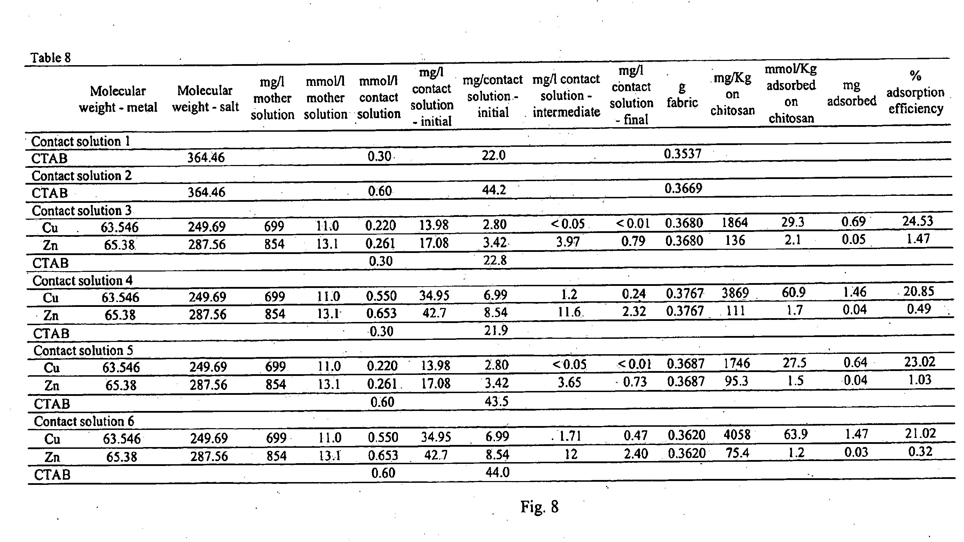

- figs. 1 to 12 show Tables summarizing the experimental data for the present invention;
- fig. 13 is a schematic representation, partly in section, of a pocket filter comprising a filter according to the present invention;
- fig. 14 is a schematic representation in plane of a flat filtering cell comprising a filter according to the present invention;
- fig. 15 is a schematic representation of a corrugated filter comprising a filter according to the present invention.

### DETAILED DESCRIPTION OF A PREFERENTIAL FORM OF EMBODIMENT

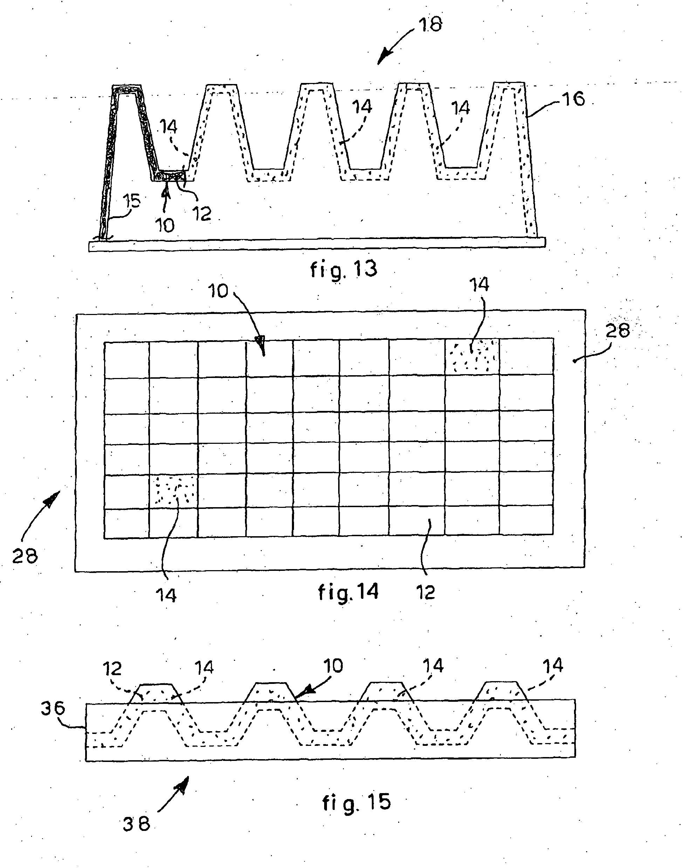

With reference to the attached drawings, fig. 13 shows a pocket filter 18 comprising a filter 10 according to the present invention.

The filter 10 comprises a filtering support 12, in this case with a non-woven fabric (NWF) base.

The filtering support 12 is formed by solid chitosan, in this case 16% in weight with respect to the weight of the filtering support 12, even if other percentages in weight are possible, as described above. The remaining is substantially a traditional synthetic polymeric fiber on which one or more metals 14 in ionic form adhere (in fig. 13 the proportions are deliberately unreal in order to show the bactericidal metals) in the concentrations as discussed above, with a bactericidal action, such as noble metals or heavy metals, taken individually or as a mixture with each other.

In this case, the pocket filter 18 is formed by a support frame 16, generally made of plastic material, and a filtering card of shaped synthetic polymeric fiber 15, which functions as a structural element, combined with the filtering support 12 as above.

Fig. 14 shows another form of embodiment of the filter 10 according to the present invention, in which there is a flat filtering cell 28, typically for use in fan-coil units, comprising a support frame 26, typically made of plastic, which supports a flat filtering element formed by the filtering support 12 with a chitosan and synthetic polymeric fiber base, functionalized with metals 14 with a bactericidal action, suitably shaped, in this case a flat rectangular shape (in this case too the proportions are deliberately unreal in order to show the bactericidal metals).

Fig. 15 shows a further form of embodiment of the filter 10 according to the present invention, in which there is a corrugated filter 38 formed by a support frame 36 that supports a filtering element formed by the filtering support 12 suitably shaped in corrugations, on which the bactericidal action metals 14 are adhered, highlighted in unreal scale to facilitate comprehension.

In the forms of embodiment in figs. 13-15, given as a non-restrictive example of the field of protection of the present invention, the metals could be replaced by or combined with a molecule chosen from among quaternary ammonium salts in the concentrations as discussed above, such as for example CTAB.

### EXPERIMENTAL TRIALS

Filters according to the present invention and as described above were prepared and tested to evaluate the adsorption of the functionalizing agent, metal or quaternary ammonium salt, such as CTAB, and also the efficiency of the bactericidal action.

Applicant has experimented with filtering supports 12 made with chitosan in a concentration between 15% and 35% in weight, between 15% and 25% in weight, between 15% and 20% in weight and between 15% and 17% in weight.

We shall now give a brief description of the results obtained with reference to a concentration of chitosan of 16% in weight. Similar results were obtained or are expected with the concentrations of chitosan as above.

The functional compatibility on a standard aeraulic machine, in terms of efficiency in treating the air and in prevalence, were respected using the filter according to the present invention.

### i) Materials and methods

The samples to be subjected to the functionalizing treatment and then used in microbiological tests consist of rectangles of non-woven fabric (NWF), typically containing a synthetic polymeric fiber, such as for example viscous fibers, or polypropylene or again Nylon 6,6, and chitosan in a percentage concentration in weight equal to 16%, measuring 5x10 cm and weighing about 0.3-0.4 g (the weight of every sample is noted exactly to a resolution of 0.1 mg). Every sample of chitosan-NWF is put in a can of PE together with a contact solution (200 ml) for bonding the metals.

In these experiments we tested Cu, Zn, Li, Mn and Ag, as well as CTAB. The experimental results for the other metals such as gold, platinum and iron, are in the process of being defined or are still to be defined in the future.

The contact solutions are prepared starting from mother solutions (concentration 10 mM) of metal salts: CuSO₄·5H₂O, ZnSO₄·7H₂O, LiCl₂, MnSO₄·H₂O, which are selected according to requirements and diluted to the desired molarity (the range used is 0.01- 2 mM).

The solutions containing Ag are prepared starting from a solution of AgNO₃ Fluka with an exact titer of 0.1 N.

The contact solutions containing CTAB (Cetyl trimethylammonium bromide) are prepared by a direct weighing of the salt in the range of 0.30-0.60 mM (in any case less than the critical micellar concentration of the CTAB, which in literature is equal to 0.9 mM). The CTAB is a quaternary cationic surface-active agent which not only has the same ionic properties as metals (positive net charge) but also has a certain anti-bacterial power (and indeed is used as a detergent-disinfectant in many domestic products for the house).

The cans containing the sample to be treated and the contact solution are hermetically sealed and stirred for 24 hours.

The solutions containing Ag⁺ solutions are kept in the dark, wrapping the can in an aluminum sheet.

At the end of stirring, the samples of NWF-chitosan are washed with de-ionized water and put to dry in an oven at 40°C; the contact solutions are kept.

Once the samples are dry, a portion is taken from one of them (about half, or 0.1-0.2 g) to be subjected to mineralization (by acid digestion in a microwave oven) and subsequently the minerals are determined by means of atomic absorption spectrophotometry.

The contact solutions are subjected to the same determination, without preliminary digestion (except for the samples also treated with CTAB).

In this way the adsorption efficiency of the various types of metal on the sample is evaluated, crossing the data on the metal content of the NWF with the residue in the solution.

As far as the samples treated with CTAB are concerned, the adsorption efficiency is determined only indirectly through the difference, dosing the residual CTAB in the mother solution after contact, by means of a spectrophotometric test in the visible range.

The remaining part of the sample is subjected to bacteriological tests, which essentially consist of evaluating the bacterial growth following contact with aerosol containing high concentrations of microorganisms.

To this end a bacterial suspension is prepared, taking with the tip of a tampon 1 or 2 colonies of young cultures (24/48 hours) of *Staphylococcus aureus* (strain ATCC 25923) so as to have a cell concentration of about 10⁷ UFC/ml.

The concentration of the suspension is in any case verified *a posteriori*, by L-loop plating on Tryptic Soy agar quantities of 0.1 ml of the mother solution and subsequent serial dilutions (up to 10-4), then leaving them to incubate at 36°C for 24 hours and then carrying out the necessary counting.

The bacterial mother suspension thus obtained is transferred into a sterile ampoule for aerosol, which is then attached on a hooded stand with a laminar stream.

The residual portion of the NWF samples treated is put into sterile containers of plastic material provided with screw-type stoppers.

In each container (one per sample), bacterial aerosol is made to flow for 10 minutes, corresponding for each titer of the original suspension of 10⁷ UFC/ml to about 10⁷ of bacterial cells/sample.

After contact with the bacterial aerosol each sample is divided into 2 sub-portions:
- a first sub-portion is put in a tube containing non-selective liquid culture medium (TSB, Tryptone Soya Broth);
- a second sub-portion is put in Petri dishes on the surface of solidifying Tryptic Soy agar medium. Afterward, when solidification has occurred, the fragment of NWF is covered with a few milliliters [ml] of still liquid Tryptic Soy agar, so as to be completely included in the culture medium, with an agar thickness of a few micrometers [µm] between the surface of the sample and the surface of the medium.

The same procedure is applied to a rectangle of NWF-chitosan having the same size as the samples and not treated with metal salts or CTAB, which is subjected to contact with bacterial aerosol in the same way as the samples and which therefore acts as a blank or reference sample.

The tubes containing the liquid medium and the Petri dishes are put in a thermostat to incubate at a temperature of 30°C and checked every day to verify the presence of turbidity (tubes with TSB) or growth of colonies (dishes with

Tryptic Soy agar) for a period of 10 days.

### ii) Results

Various treatment tests were carried out on the NWF-chitosan, on each occasion varying composition and concentration of the metals in the contact solutions, in order to determine the adsorption efficiencies and to evaluate possible competitive and synergic effects. The metals selected for the experiments (Ag, Cu, Zn, Mn, Li) and CTAB were used alone or in a mixture.

Then the anti-bacterial efficiency of each batch was measured using the methods described above.

The detailed accounts of the tests are contained in Tables 1 - 8 with regard to the chemical adsorption tests and in Tables 9 - 12 with regard to the bacteriological tests.

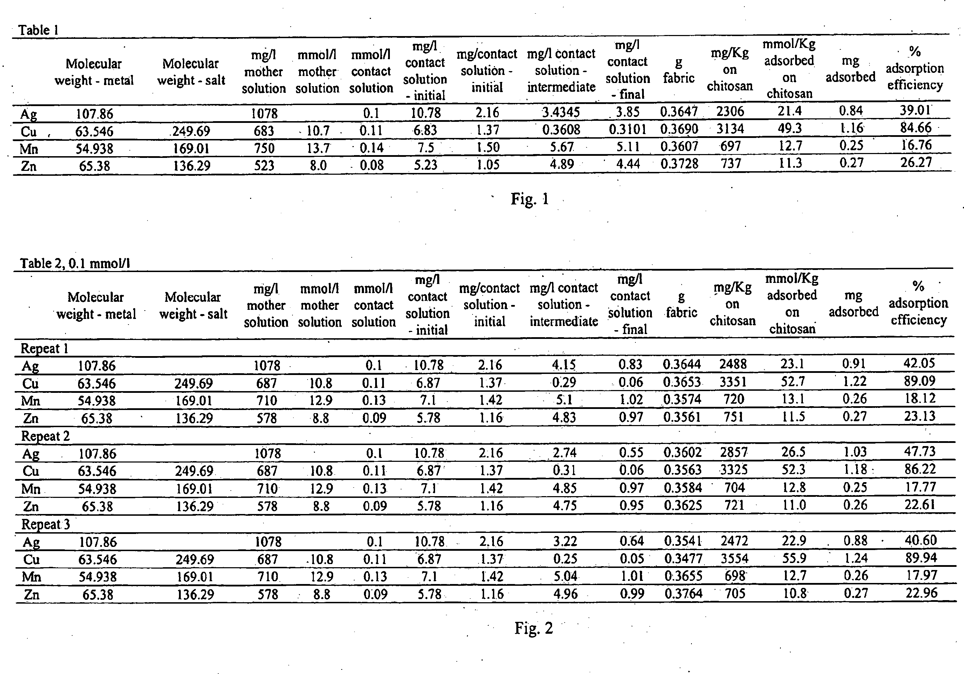

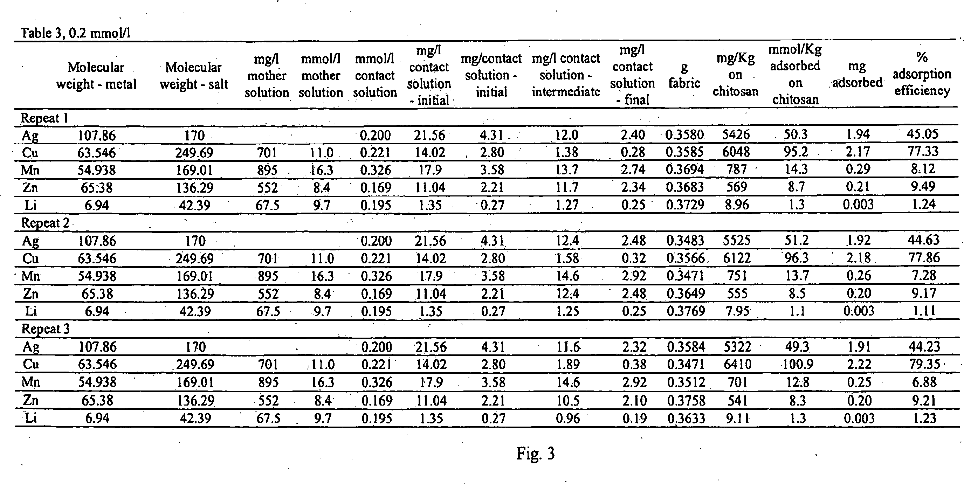

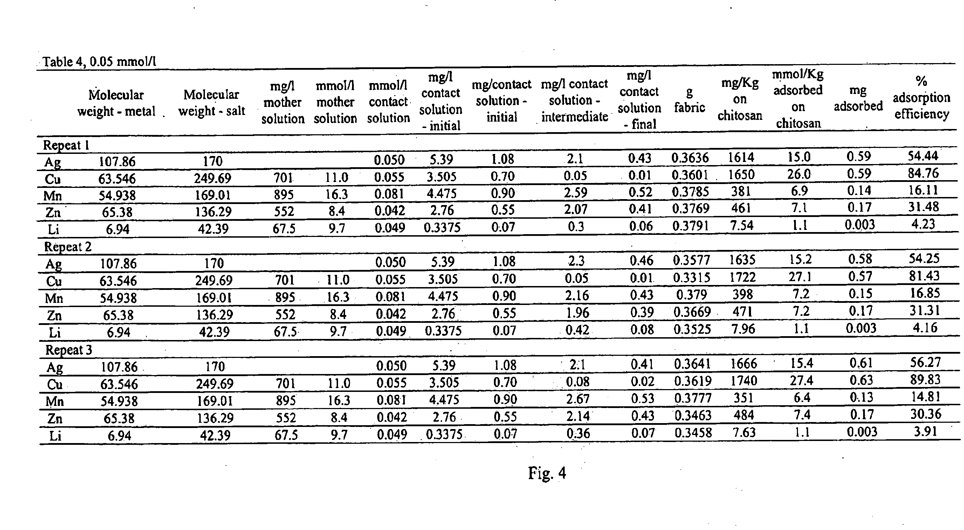

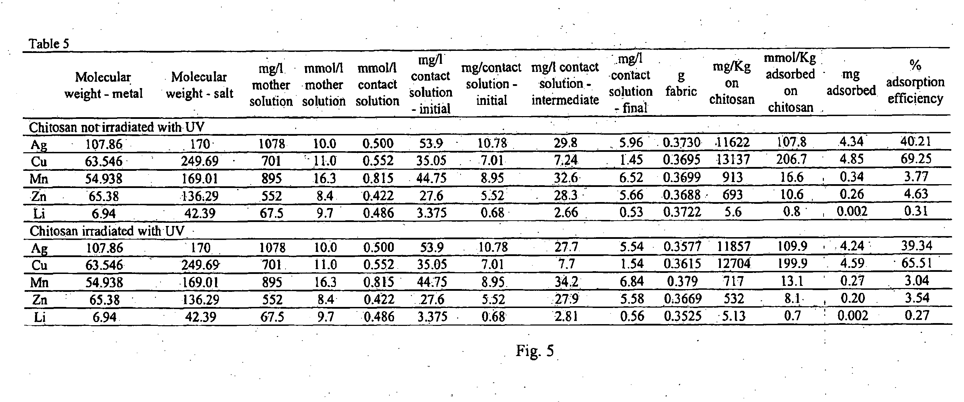

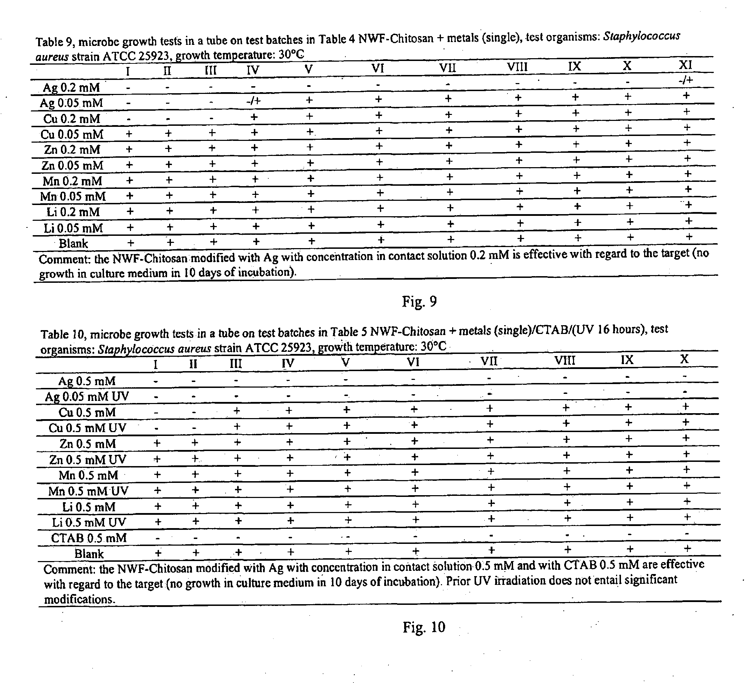

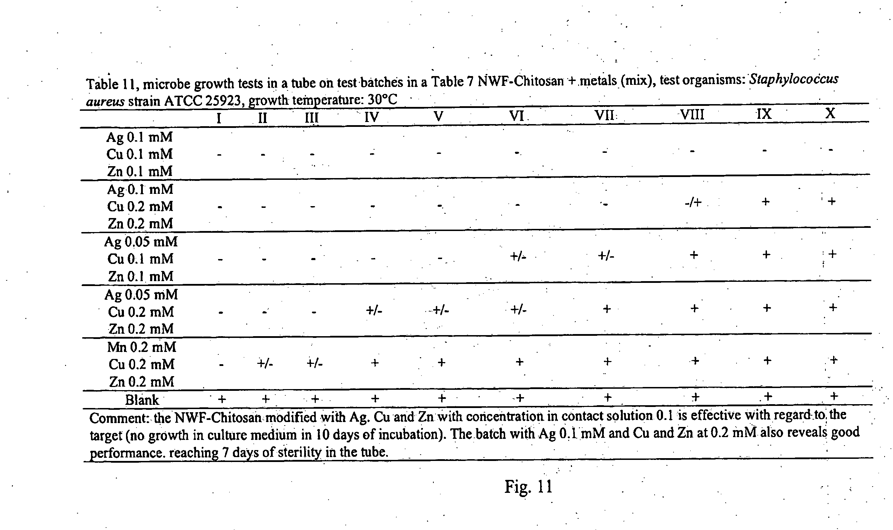

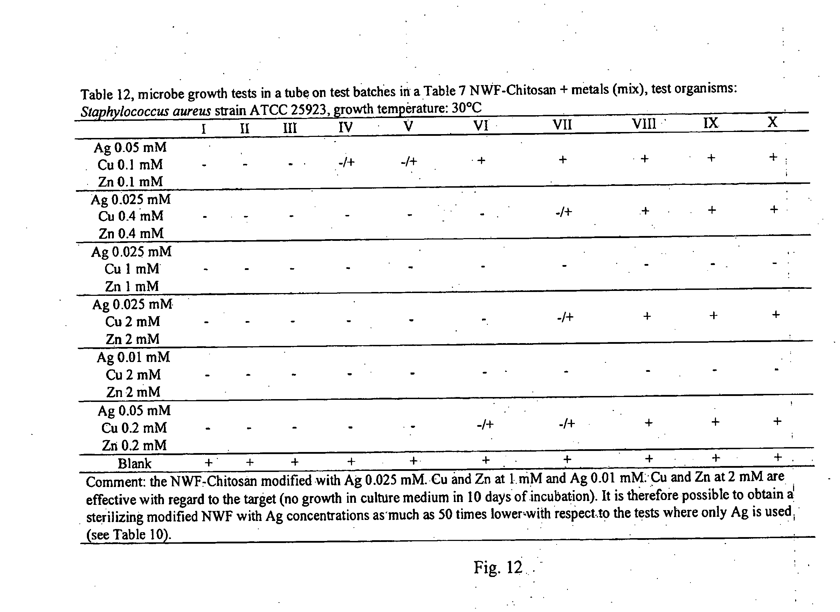

There now follows a synthetic account of the various tests:
- Test 1 (table 1 in fig. 1): Ag, Cu, Zn and Mn in individual contact solutions with concentrations of 0.1 mM. The metal with the highest adsorption yields is Cu (> 80%), followed by Ag (40%), whereas Zn and Mn have lower levels (respectively 26% and 16%). No microbiological tests were carried out with this batch.
- Test 2 (Table 2 in fig. 2): triple repeat of test 1. The results of the first test were substantially confirmed.
- Test 3 (Table 3 in fig. 3): Ag, Cu, Zn, Mn and Li in individual contact solutions with concentrations of 0.2 mM, triple. The highest adsorption efficiency was obtained for Cu (77-80%) and Ag (45%); the other metals have efficiency levels of <10%. Only the sample with Ag had sufficient anti-bacterial efficiency (turbidity after 10 days) (Table 9 in fig. 9); the sample with Cu inhibited microbe growth for 3 days.
- Test 4 (Table 4 in fig. 4): Ag, Cu, Zn, Mn and Li in individual contact solutions with concentrations of 0.05 mM, triple. The highest adsorption efficiency was obtained for Cu (>80%) and Ag (54%), whereas the efficiency for Zn, Mn and Li (in decreasing order) were less than 31.5%. The highest anti-bacterial efficiency was with Ag (turbidity of the TSB in 4 days, but still insufficient) (Table 9); all the other metals gave turbidity from day I.
- Test 5 (Table 5 in fig. 5); Ag, Cu, Zn, Mn and Li in individual contact solutions with concentrations of 0.5 mM, double, using in the repeat samples of NWF-chitosan previously irradiated with UV rays for about 16 hours; CTAB in individual solution of 0.45 mM. The adsorption efficiencies diminish further as the concentration of the solutions increases: the best efficiency was given by Cu with values of just below 70%, whereas Ag was below 40%. As far as the anti-bacterial efficiency is concerned, the sample with Ag was effective for a minimum period of 10 days, whereas the sample with Cu for 2 days; all the others produced turbidity starting from day I. The sample treated with CTAB produced results comparable to those of Ag (Table 10 in fig. 10). No significant differences were found between the samples treated with UV rays and those not treated.
- Test 6 (Table 6): Ag, Cu and Zn in a mixture in 5 formulations with different concentrations (range 0.05-0.2 mM); Cu, Mn and Zn in a mixture in 1 formulation (without Ag). In the mixture the adsorption efficiencies of Cu and Ag are similar, until they are inverted in mixtures where the molarity of the Ag is lower than that of the Cu (proportional to the difference in molarity). In particular, in the sample with 0.05 mM of Ag and 0.2 mM of Cu (sample 5), there were efficiencies respectively of 86% and 75%; in the other samples the adsorption efficiencies of Ag and Cu remained in the range 60-90%. As far as Zn is concerned, the efficiencies are always very low, in the range of 6-15%. With regard to anti-bacterial efficiency (Table 11 in fig. 11), all the samples showed some action inhibiting the microbial flora, but only sample 1 (Ag, Cu and Zn, all 0.1 mM) gave satisfactory results, producing turbidity in the culture medium after 10 days. Sample 2 (Ag again at 0.1 mM, but Cu and Zn at 0.2 mM) also gave satisfactory results, producing turbidity only on day VIII.
- Test 7 (Table 7): Ag, Cu and Zn in a mixture in 6 formulations with different concentrations (range 0.01-0.05 mM for Ag, 0.1-2 mM for Cu and Zn). The increased concentration for Cu and Zn gave a general decrease in the adsorption yields, probably due to the intervention of competitive factors. In particular for Ag, only in one case (sample 6) is efficiency > 80%, in the remaining cases there were percentages much lower than 50%; for Cu, there was a gradual tendency for reduced % efficiency as the concentration increased, but this did not happen for Zn, for which there was an obvious tendency to saturation already at low concentrations (efficiency never exceeded 15%). However, the high concentration of Cu, together with Ag, caused both sample 3 (Ag 0.025 mM, Cu 1 mM, Zn 1 mM) and sample 5 (Ag 0.01 mM, Cu 2 mM, Zn 2 mM) to show an anti-bacterial efficiency that continued after the 10 days, whereas for the other samples there was turbidity of the culture medium in 5-7 days (Table 11).
- Test 8 (Table 8): CTAB in individual solutions (range of concentrations 0.3 - 0.6 mM) or in mixtures with Cu and Zn (range 0.2-0.5 mM). In the mixtures with CTAB, the Cu and Zn seemed to bond less, given the same concentration, compared with the samples in the previous tests. However, in this case, all the samples (with or without metals) showed full anti-bacterial effectiveness which led to the culture media remaining limpid well after the standard 10 days (Table 12 in fig. 12).

### iii) Conclusions

Different experimental levels were explored, or different combinations of functionalizing metal agents on a NWF base of synthetic polymer composite with chitosan in a nominal concentration of 16%. The exchange capability with the following metals having an evident anti-bacterial power (according to data from literature) was experimented: Ag, Cu, Zn, Mn, Li.

Of these, Ag and Cu guarantee advantageous adsorption yields, with percentages higher than 40% and maximums over 80%.

Zn too, in some conditions, achieves significant adsorption percentages up to more than 30% with respect to the weight of the biopolymer.

It can therefore be deduced that these three metals can be considered suitable for the formulation of a modified NWF-chitosan for an anti-bacterial function.

Therefore functionalizations were also tested with the combination of the three metals that might provide satisfactory results with regard to anti-bacterial power.

After the chemical preparation the modified fabrics were subjected to microbiological tests.

It clearly emerged that the non-functionalized fiber does not show any significant anti-bacterial power whereas, on the contrary, coupling with metals confers significant anti-bacterial properties on the fabric.

The metal that gives this improvement of the material is essentially silver, which shows said properties at concentrations of 0.2-0.5 mM (in the contact solution).

This is equivalent to having about 5.5 mg Ag/Kg fiber at 0.2 mM and about 11 mg Ag/Kg fiber at 0.5 mM. Silver alone does not show maximum anti-bacterial power below 0.2 mM (e.g. at 0.1 mM). Below these concentrations Ag only has any effect in combination with other metals. It has been verified that with Ag from 0.01 mM to 0.025 mM - and obviously beyond, even if at these low concentrations certainly economic advantages are obtained - and Cu and Zn at 1 mM or 2 mM, the intended targets are achieved, thus using 10-20, and even 50 times less compared with Ag taken individually. Therefore, having ascertained the real possibility of obtaining a fabric with a high anti-bacterial power significantly reducing the concentration of Ag coupled with other, low-cost metals, in this first step we verified if an organic molecule studied for a long time by Applicant, known as CTAB, a surface-active agent that has a chemical/physical behavior similar to that of heavy metals, showed any anti-bacterial power, in relation to the cationic exchange capacity, since it has a positive net charge.

Applicant has already studied CTAB as a functionalizer of zeolites in order to confer upon them high adsorption capacities of volatile organic compounds.

It is also known that CTAB, as a quaternary ammonium compound, reveals disinfectant properties in water solutions.

For this reason applicant has tried an exchange with the NWF-chitosan and subsequently proved its sterilizing capacities.

The results were favorable beyond all expectations, since in all cases tested the NWF-chitosan functionalized with CTAB showed great anti-bacterial characteristics, both alone and in association with metals.

Therefore, using CTAB as an alternative functionalizer and/or combined with one or more metals is configured as a type of innovative compound. Applicant will therefore continue with bacteriological testing, using gram-negative strains, of some of the best types of fabric as emerged during the first step, in collaboration with the CNR (Italian National Research Council). We will also quantify the exchange yields of CTAB and define the technological-industrial process for the serial production of the new material.

## Claims

1. Filter for cooling, ventilation, air-conditioning, heating and air purifying plants, **characterized in that** it comprises a filtering support (12) formed by one or more synthetic polymeric fibers and a solid chitosan-based biopolymer in concentration in weight greater than or equal to about 15% with respect to the weight of said filtering support (12), one or more metals (14) in ionic form with a bactericidal action being stably associated with said filtering support (12) and being chosen from a group comprising: noble metals such as silver, gold, platinum, or heavy metals such as iron, copper, manganese, zinc, lithium, or an organic bactericidal molecule chosen from quaternary ammonium salts, said metals (14) being taken individually or in a mixture with each other, or individually or in a mixture with the quaternary ammonium salt, said metals (14) and/or said quaternary ammonium salt being added, with a chemical bond, both inside the biopolymer and also on its surface.

2. Filter as in claim 1, **characterized in that** it has a weight in grams per square meter comprised between 70 g/m² and 85 g/m² and a thickness comprised between 0.40 mm and 0.60 mm.

3. Filter as in claim 1 or 2, **characterized in that** it provides a range in the concentration of chitosan comprised between 15% and 35% in weight with respect to the weight of the filtering support (12), preferably between 15% and 25% in weight, even more preferably between 15% and 20% in weight with respect to the weight of the filtering support (12).

4. Filter as in claim 1, 2 or 3, **characterized in that** the metals are selected from silver, copper and zinc, with absorption on the biopolymer higher than 30% in weight.

5. Filter as in any claim hereinbefore, **characterized in that** the metal in ionic form selected is silver with a concentration comprised between about 0.2 mM and 0.5 mM, or is silver with a concentration higher than or equal to 0.01 mM, preferably between 0.01 mM and 0.025 mM, in a mixture with copper and zinc, both with a concentration higher than or equal to 1 mM, preferably between 1 mM and 2 mM, with reference to a contact solution with the biopolymer.

6. Filter as in any claim hereinbefore, **characterized in that** the quaternary ammonium salt has a concentration of approximately 0.5 mM with reference to a contact solution with the biopolymer.

7. Filter as in any claim hereinbefore, **characterized in that** the filtering support (12) is in the form of a fabric with a regular weave, that is, of the meshed type with the warp and woof based on said biopolymer, or as a non-woven fabric (NWF).

8. Filter as in any claim hereinbefore, **characterized in that** said quaternary ammonium salt is Cetyl trimethylammonium bromide (CTAB).

9. Filter as in any claim hereinbefore, **characterized in that** said one or more synthetic polymer fibers are chosen from a group comprising viscous fibers, or polypropylene, or Nylon 6,6.

10. Filtering device of the type with pockets, rigid or soft, or of the type with corrugated filter, or a filtering cell, flat or with a tubular sack, for fan-coil units, comprising a filter as in any claim hereinbefore, combined with a further filtering element such as a synthetic filtering polymeric fiber, or a filter card of pleated glass fiber.

11. Method for the production of a filter for cooling, ventilation, air-conditioning, heating and air purifying plants, **characterized in that** it comprises:
- a step of forming a filtering support (12) by one or more synthetic polymeric fibers and by a solid chitosan-based biopolymer in concentration in weight greater than or equal to about 15% with respect to the weight of the filtering support (12),
- a step of stably associating one or more metals (14) in ionic form with a bactericidal action being with said filtering support (12), said one or more metals (14) in ionic form being chosen from a group comprising: noble metals such as silver, gold, platinum, or heavy metals such as iron, copper, manganese, zinc, lithium, or an organic bactericidal molecule chosen from quaternary ammonium salts,
wherein, when one or more metals (14) are present, said step of stably associating includes taking said metals (14) individually or in a mixture with each other, or individually or in a mixture with the quaternary ammonium salt, and adding said metals (14) individually or in a mixture with each other, or individually or in a mixture with the quaternary ammonium salt, by means of a chemical bond, both inside the biopolymer and also on its surface.

12. Method as in claim 11, **characterized in that** said one or more metals (14) are stably associated with the biopolymer incorporating powders of one or more of the metals (14) directly in a mixture of molten biopolymer that is then extruded and the synthetic polymeric fibers are added using mechanical and thermal processes in order to form the filtering support (12), or said one or more metals (14) are stably associated to the biopolymer by depositing metal vapors onto the biopolymer, passing the biopolymer in a vacuum chamber where said metal vapors deposited onto the biopolymer are produced, bonding stably thereto, or the biopolymer is heated to its softening temperature and the heated biopolymer is subjected to shooting with metal powders that are incorporated inside it and on its surface.

13. Method as in claim 11, **characterized in that** said one or more metals (14) and/or said quaternary ammonium salt are stably associated in ionic form with the biopolymer, by means of a contact solution that acts as an ionic bath in which a salt of the selected metal or the quaternary ammonium salt is dissolved and in which the formed biopolymer is immersed or transits.

14. Method as in claim 13, **characterized in that**, in the case of said one or more metals (14), the selected metal is silver with a concentration comprised between about 0.2 mM and 0.5 mM, or is silver with a concentration higher than or equal to 0.01 mM, preferably between 0.01 mM and 0.025mM, in a mixture with copper and zinc, both with a concentration higher than or equal to 1 mM, preferably between 1 mM and 2 mM, with reference to the contact solution with the biopolymer, or in the case of said quaternary ammonium salt, the quaternary ammonium salt has a concentration of approximately 0.5 mM with reference to the contact solution.

15. Method as in any claim from 11 to 14, **characterized in that** said quaternary ammonium salt is Cetyl trimethylammonium bromide (CTAB).

## Patentansprüche

1. Filter für Kühlungs-, Lüftungs-, Klimatisierungs-, Heizungs- und Luftreinigungsanlagen, **dadurch gekennzeichnet, dass** er aufweist einen Filterträger (12), welcher aus einer oder mehreren synthetischen Polymerfasern und einem festen, chitosanbasierten Biopolymer mit einer Gewichtskonzentration größer oder gleich ungefähr 15% bezüglich des Gewichts des Filterträgers (12) ausgebildet ist, ein oder mehrere Metalle (14) in ionischer Form mit einer bakteriziden Wirkung, welche stabil mit dem Filterträger (12) verbunden ist/sind und aus einer Gruppe ausgewählt ist/sind, welche aufweist: Edelmetalle, wie z.B. Silber, Gold, Platin, oder Schwermetalle, wie z.B. Eisen, Kupfer, Mangan, Zink, Lithium, oder ein organisches, bakterizides Molekül, welches aus quartären Ammoniumsalzen ausgewählt ist, wobei die Metalle (14) einzeln oder in einer Mischung miteinander oder einzeln oder in einer Mischung mit dem quartären Ammoniumsalz zu nehmen sind, wobei die Metalle (14) und/oder das quartäre Ammoniumsalz mittels einer chemischen Bindung sowohl innerhalb des Biopolymers als auch an dessen Oberfläche angefügt sind.

2. Filter gemäß Anspruch 1, **dadurch gekennzeichnet, dass** er ein Gewicht in Gramm pro Quadratmeter, welches zwischen 70 g/m² und 85 g/m² liegt, und eine Dicke, welche zwischen 0,40 mm und 0,60 mm liegt, aufweist.

3. Filter gemäß Anspruch 1 oder 2, **dadurch gekennzeichnet, dass** er einen Bereich der Chitosan-Konzentration aufweist, welcher zwischen 15 und 35 Gewichtsprozent bezüglich des Gewichts des Filterträgers (12), vorzugsweise zwischen 15 und 25 Gewichtsprozent, noch bevorzugter zwischen 15 und 20 Gewichtsprozent bezüglich des Gewichts des Filterträgers (12) liegt.

4. Filter gemäß Anspruch 1, 2 oder 3, **dadurch gekennzeichnet, dass** die Metalle aus Silber, Kupfer und Zink ausgewählt sind, wobei eine Adsorption an dem Biopolymer höher als 30 Gewichtsprozent ist.

5. Filter gemäß irgendeinem vorhergehenden Anspruch, **dadurch gekennzeichnet, dass** das ausgewählte Metall in ionischer Form Silber mit einer Konzentration, welche zwischen ungefähr 0,2 mM und 0,5 mM liegt, ist oder Silber mit einer Konzentration, welche höher als oder gleich 0,01 mM, vorzugsweise zwischen 0,01 mM und 0,025 mM, in einer Mischung mit Kupfer und Zink, beide mit einer Konzentration, welche höher als oder gleich 1 mM, vorzugweise zwischen 1 mM und 2 mM, ist, bezüglich einer Kontaktlösung mit dem Biopolymer.

6. Filter gemäß irgendeinem vorhergehenden Anspruch, **dadurch gekennzeichnet, dass** das quartäre Ammoniumsalz eine Konzentration von ungefähr 0,5 mM bezüglich einer Kontaktlösung mit dem Biopolymer aufweist.

7. Filter gemäß irgendeinem vorhergehenden Anspruch, **dadurch gekennzeichnet, dass** der Filterträger (12) in der Form eines Stoffs mit einer regelmäßigen Bindung, das heißt, vom Gitter-Typ mit dem Kettfaden und Schussfaden basierend auf dem Biopolymer, oder in der Form eines Vliesstoffs (NWF) ist.

8. Filter gemäß irgendeinem vorhergehenden Anspruch, **dadurch gekennzeichnet, dass** das quartäre Ammoniumsalz Cetyltrimethylammoniumbromid (CTAB) ist.

9. Filter gemäß irgendeinem vorhergehenden Anspruch, **dadurch gekennzeichnet, dass** die eine oder die mehreren synthetische Polymerfasern aus einer Gruppe ausgewählt sind, welche viskose Fasern oder Polypropylen oder Nylon 6,6 aufweist.

10. Filtervorrichtung von der Art mit Taschen, starr oder nachgiebig, oder von der Art mit gewelltem Filter oder eine Filterzelle, flach oder mit einem rohrförmigen Sack, für Gebläsekonvektoren, aufweisend einen Filter gemäß irgendeinem vorhergehenden Anspruch, kombiniert mit einem weiteren Filterelement, wie z.B. einer synthetischen Filterpolymerfaser oder einer Filterkarte aus plissierter Glasfaser.

11. Verfahren für die Herstellung eines Filters für Kühl-, Lüftungs-, Klimatisierungs-, Heizungs- und Luftreinigungsanlagen, **dadurch gekennzeichnet, dass** es aufweist:
einen Schritt des Ausbildens eines Filterträgers (12) durch eine oder mehrere synthetische Polymerfasern und durch ein festes chitosan-basiertes Biopolymer mit einer Gewichtskonzentration größer oder gleich ungefähr 15% bezüglich des Gewichts des Filterträgers (12),
einen Schritt des stabilen Verbindens von einem oder mehreren Metallen (14) in ionischer Form mit einer bakteriziden Wirkung, welche mit dem Filterträger (12) vorliegen, wobei das eine oder die mehreren Metalle (14) in ionischer Form aus einer Gruppe ausgewählt sind, welche aufweist: Edelmetalle, wie z.B. Silber, Gold, Platin, oder Schwermetalle, wie z.B. Eisen, Kupfer, Mangan, Zink, Lithium, oder eines organischen, bakteriziden Moleküls, welches aus quartären Ammoniumsalzen ausgewählt ist,
wobei, wenn eine oder mehrere Metalle (14) vorliegen, der Schritt des stabilen Verbindens aufweist das Nehmen der Metalle (14) einzeln oder in einer Mischung miteinander oder einzeln oder in einer Mischung mit dem quartären Ammoniumsalz und das Anfügen der Metalle (14) einzeln oder in einer Mischung miteinander oder einzeln oder in einer Mischung mit dem quartären Ammoniumsalz mittels einer chemische Bindung sowohl innerhalb des Biopolymers als auch an dessen Oberfläche.

12. Verfahren gemäß Anspruch 11, **dadurch gekennzeichnet, dass** das eine oder die mehreren Metalle (14) stabil mit dem Biopolymer verbunden werden, wobei Pulver von einem oder mehreren der Metalle (14) direkt in einem Gemisch von geschmolzenem Biopolymer aufgenommen werden, welches dann extrudiert wird, und die synthetischen Polymerfasern unter Verwendung von mechanischen oder thermischen Vorgängen hinzugefügt werden, um den Filterträger (12) auszubilden, oder das eine oder die mehreren Metalle (14) stabil mit dem Biopolymer verbunden wird/werden, indem Metalldämpfe auf dem Biopolymer abgeschieden werden, wobei das Biopolymer in eine Vakuumkammer eingebracht wird, wo die Metalldämpfe, welche auf dem Biopolymer abgeschieden werden, erzeugt werden, wobei sie sich stabil damit verbinden, oder das Biopolymer auf seine Erweichungstemperatur erwärmt wird und das erwärmte Biopolymer einem Beschießen mit Metallpulvern ausgesetzt wird, welche innerhalb davon und an dessen Oberfläche aufgenommen werden.

13. Verfahren gemäß Anspruch 11, **dadurch gekennzeichnet, dass** das eine oder die mehreren Metalle (14) und/oder das quartäre Ammoniumsalz in ionischer Form stabil mit dem Biopolymer verbunden werden mittels einer Kontaktlösung, welche als ein Ionenbad fungiert, in welchem ein Salz des ausgewählten Metalls oder des quartären Ammoniumsalzes aufgelöst ist und in welchem das ausgebildete Biopolymer eingetaucht oder hindurchgeführt wird.

14. Verfahren gemäß Anspruch 13, **dadurch gekennzeichnet, dass** im Fall des einen oder der mehreren Metalle (14) das ausgewählte Metall Silber mit einer Konzentration, welche zwischen ungefähr 0,2 mM und 0,5 mM liegt, ist oder Silber mit einer Konzentration, welche höher als oder gleich 0,01 mM, vorzugsweise zwischen 0,01 mM und 0,025 mM, in einer Mischung mit Kupfer und Zink, beide mit einer Konzentration, welche höher als oder gleich 1 mM, vorzugweise zwischen 1 mM und 2 mM, ist, bezüglich einer Kontaktlösung mit dem Biopolymer, oder dass im Fall des quartären Ammoniumsalzes das quartäre Ammoniumsalz eine Konzentration von ungefähr 0,5 mM bezüglich der Kontaktlösung aufweist.

15. Verfahren gemäß irgendeinem Anspruch von 11 bis 14, **dadurch gekennzeichnet, dass** das quartäre Ammoniumsalz Cetyltrimethylammoniumbromid (CTAB) ist.

## Revendications

1. Filtre pour des installations de refroidissement, ventilation, climatisation, chauffage et purification de l'air, **caractérisé en ce qu'**il comprend un support de filtration (12) formé d'une ou plusieurs fibres polymères synthétiques et d'un biopolymère à base de chitosan solide ayant une concentration en poids supérieure ou égale à environ 15 % par rapport au poids dudit support de filtration (12), un ou plusieurs métaux (14) sous forme ionique ayant une action bactéricide, associés de manière stable audit support de filtration (12) et choisis dans un groupe comprenant : des métaux nobles, tels que l'argent, l'or, le platine, ou des métaux lourds, tels que le fer, le cuivre, le manganèse, le zinc, le lithium, ou une molécule bactéricide organique choisie parmi des sels d'ammonium quaternaire, lesdits métaux (14) étant pris individuellement ou en mélange les uns avec les autres, ou individuellement ou en un mélange avec le sel d'ammonium quaternaire, lesdits métaux (14) et/ou ledit sel d'ammonium quaternaire étant ajoutés, par une liaison chimique, à la fois à l'intérieur du biopolymère et également sur sa surface.

2. Filtre selon la revendication 1, **caractérisé en ce qu'**il a un poids en grammes par mètre carré compris entre 70 g/m² et 85 g/m², et une épaisseur comprise entre 0,40 mm et 0,60 mm.

3. Filtre selon la revendication 1 ou 2, **caractérisé en ce qu'**il propose une plage de concentration de chitosan comprise entre 15 % et 35 % en poids par rapport au poids du support de filtration (12), de préférence entre 15 % et 25 % en poids, de manière encore davantage préférée entre 15 % et 20 % en poids par rapport au poids du support de filtration (12).

4. Filtre selon la revendication 1, 2, ou 3, **caractérisé en ce que** les métaux sont choisis à partir de l'argent, du cuivre et du zinc, l'adsorption sur le biopolymère étant supérieure à 30 % en poids.

5. Filtre selon l'une quelconque des revendications précédentes, **caractérisé en ce que** le métal sous sa forme ionique choisi est l'argent avec une concentration comprise entre environ 0,2 mM et 0,5 mM, ou l'argent avec une concentration supérieure ou égale à 0,01 mM, de préférence entre 0,01 mM et 0,025 mM, dans un mélange avec le cuivre et le zinc, tous deux avec une concentration supérieure ou égale à 1 mM, de préférence entre 1 mM et 2 mM, en référence à une solution de contact avec le polymère.

6. Filtre selon l'une quelconque des revendications précédentes, **caractérisé en ce que** le sel d'ammonium quaternaire a une concentration d'approximativement 0,5 mM en référence à une solution de contact avec le biopolymère.

7. Filtre selon l'une quelconque des revendications précédentes, **caractérisé en ce que** le support de filtration (12) est sous la forme d'un tissu ayant un tissage régulier, à savoir de type treillis avec la chaîne et la trame avec à la base dudit polymère, ou sous la forme d'un tissu non tissé (NWF).

8. Filtre selon l'une quelconque des revendications précédentes, **caractérisé en ce que** ledit sel d'ammonium quaternaire est le bromure de cétyltriméthylammonium (CTAB).

9. Filtre selon l'une quelconque des revendications précédentes, **caractérisé en ce que** lesdites une ou plusieurs fibres de polymère synthétiques sont choisies dans un groupe comprenant des fibres visqueuses, ou du polypropylène, ou du Nylon 6, 6.

10. Dispositif de filtration du type à poches, rigide ou mou, ou du type à filtre ondulé, ou cellule de filtration, plate ou avec un sac tubulaire, pour unités de bobine de ventilateur, comprenant un filtre selon l'une quelconque des revendications précédentes, combiné à un autre élément de filtration tel qu'une fibre polymère de filtration synthétique, ou une carte de filtre en fibre de verre plissée.

11. Procédé pour la production d'un filtre pour des installations de refroidissement, ventilation, climatisation, chauffage et purification de l'air, **caractérisé en ce qu'**il comprend :
- une étape consistant à former un support de filtration (12) à partir d'une ou plusieurs fibres polymères synthétiques et d'un biopolymère à base de chitosan solide ayant une concentration en poids supérieure ou égale à environ 15 % par rapport au poids du support de filtration (12),
- une étape consistant à associer de manière stable un ou plusieurs métaux (14) sous forme ionique ayant une action bactéricide avec ledit support de filtration (12), lesdits un ou plusieurs métaux (14) sous forme ionique étant choisis à partir d'un groupe comprenant : des métaux nobles, tels que l'argent, l'or, le platine, ou des métaux lourds, tels que le fer, le cuivre, le manganèse, le zinc, le lithium, ou une molécule bactéricide organique choisie à partir de sels d'ammonium quaternaire,
dans lequel, quand un ou plusieurs métaux (14) sont présents, ladite étape d'association stable comprend la prise desdits métaux (14) individuellement ou en mélange les uns avec les autres, ou individuellement ou en mélange avec le sel d'ammonium quaternaire, et l'addition desdits métaux (14) individuellement ou en mélange les uns avec les autres, ou individuellement ou en mélange avec le sel d'ammonium quaternaire, au moyen d'une liaison chimique, à la fois à l'intérieur du biopolymère et également sur sa surface.

12. Procédé selon la revendication 11, **caractérisé en ce que** lesdits un ou plusieurs métaux (14) sont associés de manière stable au biopolymère en intégrant des poudres d'un ou plusieurs des métaux (14) directement dans un mélange de biopolymère fondu, qui est ensuite extrudé, et les fibres polymères synthétiques sont ajoutées en utilisant des processus mécaniques et thermiques afin de former le support de filtration (12), ou lesdits un ou plusieurs métaux (14) sont associés de manière stable au biopolymère en déposant des vapeurs métalliques sur le biopolymère, en passant le biopolymère dans une chambre sous vide où lesdites vapeurs métalliques déposées sur le biopolymère sont produites, en les y liant de manière stable, ou le biopolymère est chauffé à sa température de ramollissement et le biopolymère chauffé est soumis à une projection de poudres métalliques qui sont incorporées à l'intérieur et sur sa surface.

13. Procédé selon la revendication 11, **caractérisé en ce qu'**un ou plusieurs métaux (14) et/ou ledit sel d'ammonium quaternaire sont associés de manière stable sous forme ionique au biopolymère, au moyen d'une solution de contact qui agit comme un bain ionique dans lequel un sel du métal choisi ou du sel d'ammonium quartenaire est dissous et dans lequel le biopolymère formé est immergé ou transite.

14. Procédé selon la revendication 13, **caractérisé en ce que**, dans le cas desdits un ou plusieurs métaux (14), le métal choisi est l'argent avec une concentration comprise entre environ 0,2 mM et 0,5 mM, ou l'argent avec une concentration supérieure ou égale à 0,01 mM, de préférence entre 0,01 mM et 0,025 mM, dans un mélange avec du cuivre et du zinc, tous deux avec une concentration supérieure ou égale à 1 mM, de préférence entre 1 mM et 2 mM, en référence à la solution de contact avec le biopolymère, ou, dans le cas dudit sel d'ammonium quaternaire, le sel d'ammonium quaternaire a une concentration d'environ 0,5 mM en référence à la solution de contact.

15. Procédé selon l'une quelconque des revendications 11 à 14, **caractérisé en ce que** ledit sel d'ammonium quaternaire est le bromure de cétyltriméthyammonium (CTAB).
